# EUROPEAN PATENT APPLICATION

(11) **EP 2 388 720 A1**
(43) Date of publication of application: **23.11.2011**
(21) Application number: 11164051.2
(22) Date of filing: 28.04.2011
(51) Int. Cl.: G06F 17/30, G06F 3/048

(54) **Display apparatus and control method for segmenting web pages**

(30) Priority: 19.05.2010 KR 20100046951; 06.10.2010 KR 20100097266; 23.06.2010 US 821649
(71) Applicant: SAMSUNG ELECTRONICS CO., LTD., Suwon-si, Gyeonggi-do (KR)
(72) Inventor: Choi, Sung-wook, Gyeonggi-do (KR); Suh, Kyung-joo, Seoul (KR); KIM, Yong-deok, Gyeonggi-do (KR); Lee, Hye-jeong, Seoul (KR)
(74) Representative: Hewett, Jonathan Michael Richard

(57) **Abstract**

A display apparatus and a control method thereof are provided. The display apparatus comprising: an input unit which receives a web page; an image processor which processes the web page; a display unit which displays the web page processed by the image processor; a command receiver which receives a user's command for the web page; and a controller which divides the web page into a plurality of first blocks, merges two or more of the plurality of first blocks to form a second block, which has a predetermined reference size, and browses the plurality of first blocks and the second block according to the user's command.

## Description

The present invention relates to a display apparatus and a control method thereof, and more particularly, to a display apparatus and a control method thereof which has a web-browsing function.

A display apparatus such as a TV, a smart phone and a mobile phone may include a network communication means and a web browser to browse a web page on the Internet.

However, a user would need to be a certain distance from the display apparatus to view a web page, since the display apparatus rarely provides the same readability for an entire web page as a PC does due to a relative ratio of screen size to distance, or the like. To solve the foregoing problem, the display apparatus enables a user's web browsing by a ratio adjustment including enlargement/reduction of a screen and by displaying a partial web page according to a user's manipulation of a scroll bar.

However, such method of displaying the web page by a user's manipulation of the scroll bar does not allow a user to view a desired web page promptly and easily.

Accordingly, one or more exemplary embodiments provide a display apparatus and a control method thereof which enables a user to browse a desired part of a web page more promptly and easily.

The foregoing and/or other aspects may be achieved by providing a display apparatus including: an input unit which receives a web page; an image processor which processes the web page; a display unit which displays thereon the web page processed by the image processor; a command receiver which receives a user's command for the web page; and a controller which divides the web page into a plurality of first blocks, merges two or more of the plurality of first blocks to form a second block, which has a predetermined reference size, and browses the plurality of first blocks within the second block according to the user's command.

The reference size of the second block may correspond to a size of a screen of the display unit.

The controller may move a focus to the first blocks, which are not merged as the second block, and to the second block when the browsing operation is performed.

Two or more of neighboring first blocks which are merged as the second block may have coordinates, widths and heights at least one of which is the same.

The controller may divide the web page into the plurality of first blocks by using a hierarchy structure of the web page.

The foregoing and/or other aspects may be achieved by providing a control method of a display apparatus, the control method including: receiving a web page; dividing the web page into a plurality of first blocks, merging two or more of the plurality of first blocks to form a second block, which has a predetermined reference size, and displaying the plurality of first blocks within the second block; receiving a user's command; and browsing the plurality of first blocks within the second block according to the user's command.

The reference size of the second block may correspond to a size of a screen of the display unit.

The browsing may include moving a focus to the first blocks not merged to form the second block and to the second block.

Two or more of neighboring first blocks, which are merged as the second block may have coordinates, widths and heights at least one of which is the same.

The displaying may include dividing the web page into the plurality of first blocks by using a hierarchy structure of the web page for display.

The foregoing and/or other aspects may be achieved by providing a display apparatus including: an input unit which receives a web page; an image processor which processes the web page; a display unit which displays thereon the web page processed by the image processor; a command receiver which receives a user's command for the web page; and a controller which divides the web page into a plurality of first blocks, browses the plurality of first blocks according to the user's command and displays on the display unit two or more of neighboring first blocks of the plurality of first blocks simultaneously if one of the two or more of the neighboring first blocks is selected.

Two or more of the neighboring first blocks may have coordinates, widths and heights at least one of which is the same.

The controller may move a focus to the first blocks, and may move the focus to another first block other than two or more of the neighboring first blocks if a user's command is received to move the focus while one of the two or more of the neighboring first blocks is focused.

The controller may divide the web page into the plurality of first blocks by using a hierarchy structure of the web page.

The foregoing and/or other aspects may be achieved by providing a control method of a display apparatus, the control method including: receiving a web page; dividing the web page into a plurality of first blocks for display; receiving a user's command; and browsing the plurality of first blocks to display on the display unit two or more of neighboring first blocks at a time if one of the two or more of the neighboring first blocks is selected from the plurality of first blocks according to the user's command.

Two or more of the neighboring first blocks may have coordinates, widths and heights at least one of which is the same among the neighboring first blocks.

The browsing may include moving a focus to the first blocks, and moving the focus to another first block other than two or more of the neighboring first blocks if a user's command is received to move the focus while one of the two or more of the neighboring first blocks is being focused on.

The displaying may include dividing the web page into the plurality of first blocks by using a hierarchy structure of the web page for display.

The above and/or other aspects will become apparent and more readily appreciated from the following description of the exemplary embodiments, taken in conjunction with the accompanying drawings, in which:
FIG. 1 illustrates a display apparatus according to an exemplary embodiment;
FIG. 2 is a block diagram of a display main body in FIG. 1;
FIGS. 3 and 4 illustrate an example of a web page displayed by the display apparatus in FIGS. 1 and 2;
FIG. 5 illustrates an example of a second block according an exemplary embodiment;
FIG. 6 is a flowchart of a control method of the display apparatus in FIGS. 1 and 2;
FIG. 7 illustrates an example of a second block according to another exemplary embodiment; and
FIG. 8 is a flowchart of a control method of the display apparatus according to another exemplary embodiment.

Below, exemplary embodiments will be described in detail with reference to accompanying drawings so as to be easily realized by a person having ordinary knowledge in the art. The present invention may be embodied in various forms without being limited to the exemplary embodiments set forth herein.

Descriptions of well-known parts are omitted for clarity, and like reference numerals refer to like elements throughout.

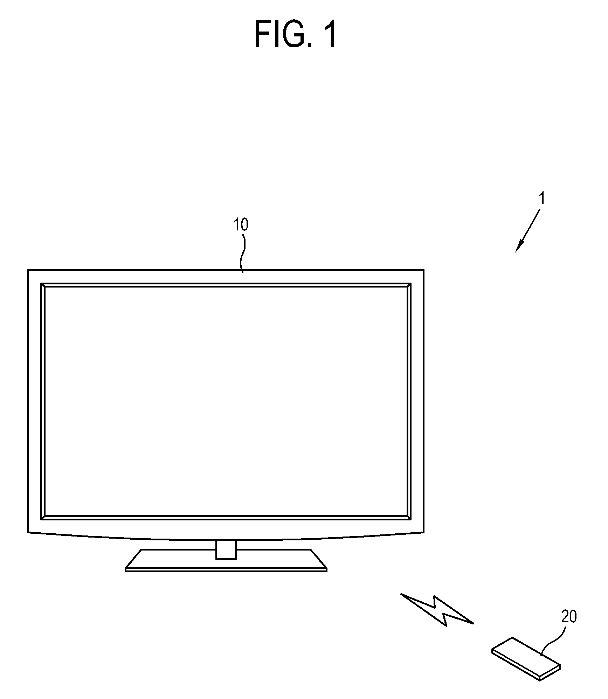

FIG. 1 illustrates a display apparatus 1 according to an exemplary embodiment. The display apparatus 1 in FIG. 1 includes a television (TV) as an example, but is not limited thereto. Alternatively, the display apparatus 1 may include any device which has a web-browsing function such as a smart phone or a mobile phone. As shown therein, the display apparatus 1 may include a display main body 10 to display an image thereon, and a remote controller 20 to control the display main body 10 by a user's manipulation. The remote controller 20 transmits a remote control signal by a user's manipulation to the display main body 10, and the display main body 10 receives a remote control signal from the remote controller 20 and performs a corresponding operation.

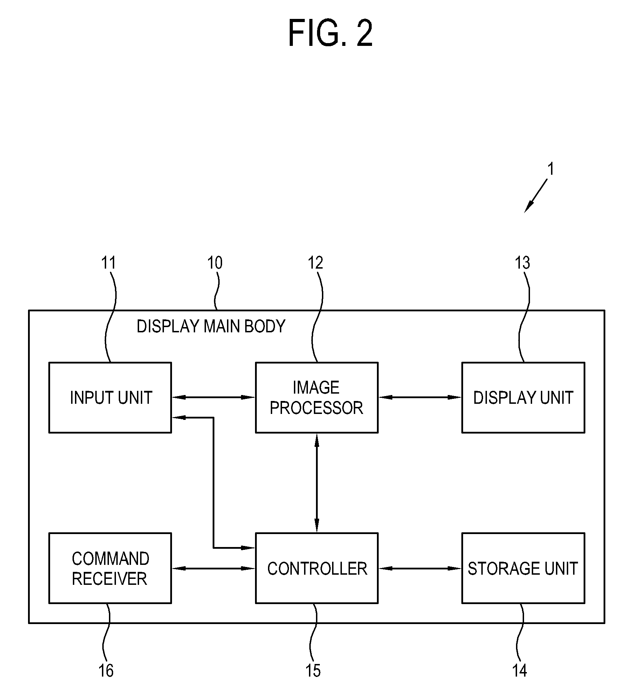

FIG. 2 is a block diagram of the display main body 10 in FIG. 1. The display main body 10 includes an input unit 11, an image processor 12, a display unit 13, a storage unit 14, a controller 15 and a command receiver 16.

The input unit 11 may receive web page data from the Internet. The input unit 11 may perform a communication operation through a network to receive web page data. The communication operation performed by the input unit 11 includes wired communication and wireless communication.

The input unit 11 may further receive an image signal including an image content.

The image signal may include an audio content and/or a data content as well as the image content. The image signal received by the input unit 11 includes a broadcasting signal transmitted by a broadcasting station and a signal input by a predetermined image device, but is not limited thereto. In the case of the broadcasting signal, the input unit 11 may selectively receive a broadcasting signal from one of a plurality of channels. The broadcasting signal includes an air wave broadcasting signal, a cable broadcasting signal, a satellite broadcasting signal and other known broadcasting signals. The type of the broadcasting signal includes digital broadcasting and analog broadcasting. The input unit 11 may process a received broadcasting signal to obtain an image content therefrom. Such signal processing includes, without limitation, tuning, analog-digital conversion, demodulation, and digital-analog conversion.

In the case of an image signal input by an image device, the input unit 11 may communicate with the image device transmitting the image signal corresponding to the property of the input image signal. Such communication includes wired communication and wireless communication, and analog communication and digital communication. The type of communication includes all types of communication which is known to be used for transmitting an image content. The type of the image device supplying the image signal to the input unit 11 includes a digital versatile disc (DVD) player, a blue-ray disc (BD) player, a PC, a mobile phone, a smart phone and other TVs but not limited thereto. The input unit 11 may process the input image signal to obtain an image content therefrom. Such image processing includes, without limitation, analog-digital conversion and digital-analog conversion.

Further, the input unit 11 may receive an image signal from a predetermined server through a network, or receive an image signal from a portable storage medium such as a universal serial bus (USB) device. In each case, the input unit 11 may perform a given communication with a counterpart device to receive an image signal. The input unit 11 may receive and process the image signal by a control of the controller 15.

The image processor 12 processes web page data (hereinafter, to be also called "web page") received by the input unit 11 and image contents obtained from an image signal for display. The image processing performed by the image processor 12 includes demultiplexing, decoding, scaling, picture quality adjustment and picture quality improvement, but is not limited thereto. The image processor 12 may process an image on a user interface (UI) menu for a user interface. The image processor 12 may overlap an image obtained from an image content and at least a part of a UI menu in a single screen or arrange the foregoing side by side.

The display unit 13 displays thereon the web page and the image processed by the image processor 12. The display method of the web page and the image by the display unit 13 is not limited, and includes all of known display methods. The display method may be provided by using liquid crystal display (LCD), organic light emitting diode (OLED), plasma display panel (PDP), projection, cathode ray tube (CRT), or the like.

The storage unit 14 stores therein data for operations of the display main body 10.

The storage unit 14 includes all types of non-volatile memories which are known to store therein data semi-permanently. The non-volatile memory may include an electrically erasable programmable read-only memory (EEPROM), a flash memory, and a hard disk drive (HDD).

The command receiver 16 receives a remote control signal from the remote controller 20. The method of receiving the remote control signal by the command receiver 16 includes infrared, Bluetooth, Wi-Fi, or the like type.

The controller 15 controls overall operations of the display main body 10. The controller 15 controls each element of the display main body 10 according to user's input information obtained from the remote control signal received from the remote controller 20. The controller 15 may control the input unit 11 to receive a desired web page and/or image signal. The controller 15 may control the image processor 12 to process the received web page and/or image contents. The controller 15 may store data in the storage unit 14 or read the data stored in the storage unit 13 if necessary for such control operation.

The controller 15 may include a non-volatile memory (not shown) to store therein an execution code of a computer program corresponding to the control operation, a volatile memory (not shown) to load at least a part of the execution code stored in the non-volatile memory, and a microprocessor (not shown) to execute the execution code loaded to the volatile memory.

The remote controller 20 may include a touch pad and a key pad to detect a user's input, a remote control signal transmitter to transmit a remote control signal corresponding to the detected user's input, and a control unit to control the foregoing elements.

The display main body 10 may further include other elements for the operation of the display apparatus 1. For example, the display main body 10 may include an audio signal receiver, an audio signal processor and an audio output unit to receive, process and output an audio signal, an input pad unit provided in the display main body 10 separately from the user input 20 to receive a user's input, and a power supply unit to supply power for operations of the display main body 10.

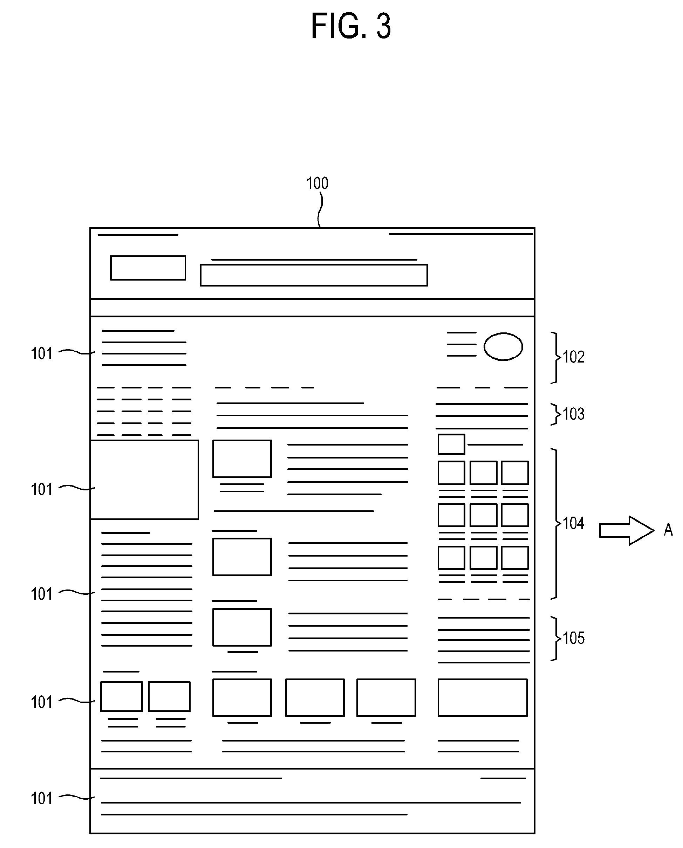

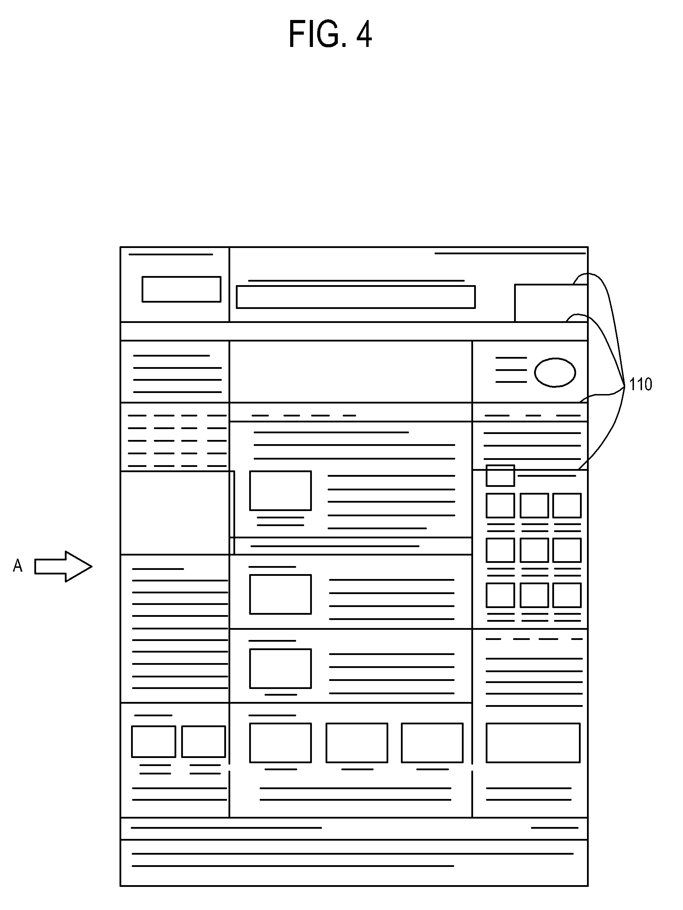

The display apparatus 1 in FIG. 1 divides a web page into a plurality of blocks and displays the divided web page in blocks. FIG. 3 illustrates an example of a web page 100 including a plurality of blocks 101 to 105. FIG. 4 illustrates an example of a web page that is divided into a plurality of blocks 101 to 105 displayed in the display apparatus 1 according to an exemplary embodiment. As shown in FIG. 3, each of the plurality of blocks 101 to 105 of the web page 100 refers to a unit area into which the web page 100 is divided according to visual, geometric, semantic, and logical standards. Lines, boxes and a circle of the plurality of blocks 101 to 105 in FIGS. 3 and 4 simplify texts, images, and diagrams of the plurality of blocks 101 to 105 for conveniences.

As shown in FIG. 4, the display apparatus 1 may display a boundary 110 between the plurality of blocks 101 to 105 so that a user may recognize the web page 100 divided into the plurality of blocks 101 to 105. The display apparatus 1 may display one of the plurality of blocks 101 to 105 by focusing a selected block on the display unit 13. That is, the display apparatus 1 may display the plurality of blocks 101 to 105, one of which is located in a substantially central area of a screen of the display unit 13. The web page 100 may be enlarged at an appropriate ratio for a user to recognize a content of the web page 100. One of the plurality of blocks 101 to 105 which is being focused on may be highlighted and displayed. The display apparatus 1 moves the focus to each of the plurality of blocks 101 to 105 by a user's manipulation of up and down and left and right buttons of the remote controller 20, to thereby browse the web page 100. Then, a user may browse the web page 100 conveniently and promptly.

The controller 15 of the display apparatus 1 controls the image processor 12 to analyze the input web page 100 and divide the web page 100 into the plurality of blocks 101 to 105. The method of dividing the web page 100 into the plurality of blocks 101 to 105 may vary. For example, the web page 100 may be divided by using a hierarchy structure of the web page 100 and by dividing the web page on an image basis. Hereinafter, this will be described in more detail.

In the "method of using the hierarchy structure of the web page 100", a document object model tree (hereinafter, the "DOM tree") of the web page 100 which is to be divided is obtained (process 1). Then, a block meeting the condition is extracted from the DOM tree (process 2). The condition may include the following:
(1) the extracted block is not the same in size as the block added before (removal of duplication);
(2) the block exists in a predetermined depth (a threshold value for speed up may be set, e.g., at an random value of 6 which is included in a range of 5 to 10);
(3) a width and a height of an HTML tag is a predetermined size or more (e.g. width of 120 and a height of 30 may be set in consideration of readability and the size of a screen);
(4) only limited tags are permitted (e.g., DIV, UL, LI, DL, DD, P, TD, Table, IFRAME, TR, FORM, DT, OL, or the like);
(5) a block a depth of which is 2 or more is not out of a parent node; and
(6) a block a depth of which is 2 or more overlaps the parent node in one of top and bottom and left and right sides.

If a block which does not include other child blocks therein, among the blocks obtained through the process 1 and the process 2, is a predetermined size or more, the concerned area may only be divided by the method of dividing the web page on an image basis (process 3). The process may be as follows:
(1) compare a color of a previous coordinate y-1 and a color of a current coordinate y by transversely scanning vertical lines of an image and a difference of a color comparison of five units or more becomes a basis for dividing a previous block and other blocks;
(2) compare a color of a previous coordinate x-1 and a color of a current coordinate x by vertically scanning transverse lines of an image and a difference of a color comparison of five or more becomes a basis for dividing a previous block and other blocks;
(3) If a color is consecutive for a predetermined number of times or more in the scanning operation in the above cases, it is determined to be a line;
(4) the largest color comparison value is selected from the difference of values to R, G and B;
(5) a recursive calculation is performed based on the result of the line scanning to the transverse and vertical points to divide blocks; and
(6) the divided blocks are extracted from those not overlapping blocks extracted previously.

If a tag area is not the same as the block size viewed by human eyes or if there is a white space between blocks and the divided areas cannot be easily viewed, the coordinates of the extracted blocks may be adjusted as follows (process 4):
(1) if blocks are right next to each other and a distance between coordinates of the blocks is smaller than a particular threshold value, a child block of the compared block has the same value as that of the previous block (the threshold value may be set at 50 if x components are compared, and set at 30 if y components are compared); and
(2) such coordinate comparison is performed to x and y coordinates of a left top of the block and x and y coordinates of a right bottom of the block and x is compared to x and y is compared to y, regardless of the location of the component.

If the web page is divided by the above method, any type of web page may be divided into blocks and browsed. Thus, readability of the web page data is maintained and convenient and prompt browsing is available. As the web page can be divided into semantic blocks, the quantity of data of the web page provided to a user may be adjusted.

The first block may vary in size depending on the property of the web page 100. If the first block is too small, e.g., if the first blocks are relatively too small, compared to a screen of the display unit 13, a user may feel inconvenienced in browsing the first blocks by moving between the first blocks. If the ratio of the web page 100 is enlarged to solve the foregoing problem, the efficiency of utilization of the screen may deteriorate and cause other problems. The first block may mean a maximum unit of a block that is divided by the foregoing method, e.g., the hierarchy structure.

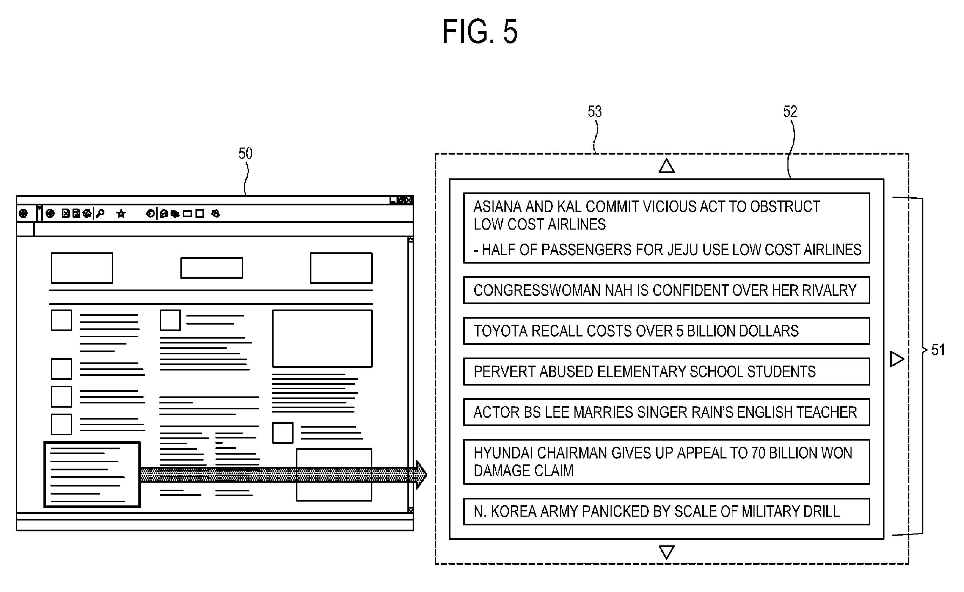

If the plurality of first blocks of the web page 100 is small, the controller 15 of the display apparatus 1 according to the exemplary embodiment merges the plurality of first blocks to form a second block, which is appropriate in size, for a user to browse the plurality of first blocks without difficulty. FIG. 5 illustrates an example of a second block 52. A reference numeral 50 in FIG. 5 refers to a web page, a reference numeral 51 refers to a plurality of first blocks included in the web page 50, and a reference numeral 53 refers to a screen of the display unit 13.

The plurality of first blocks 51 is presumed to significantly smaller than a screen 53 of the display unit 13 when the web page 50 is enlarged to a ratio at which the web page is readable. In the present exemplary embodiment, the first block 51 being significantly smaller than the screen 53 of the display unit 13 means several first blocks 51 displayed on the screen 53 of the display unit 13. The size of the screen 53 of the display unit 13 is an example of a reference size according to which the merge of the plurality of first blocks 51 is determined. The reference size determines the size of the second block 52 which is obtained from the merge of the plurality of first blocks 51. That is, merging a number of first blocks 51 into a single second block 52 is determined by the reference size. For example, the number of the plurality of first blocks 51 merged to form the second block 52 relies on the size of the second block 52 which is close to the reference size, more specifically, closest to, but smaller than, the reference size.

If the size of the plurality of first blocks 51 is smaller than the reference size, the controller 15 of the display apparatus 1 merges the plurality of first blocks 51 to form the single second block 52 and browses the plurality of first blocks 51 within the second block 52 according to a user's manipulation. That is, the controller 15 may move the focus to, and browse, the plurality of first blocks 51 not included in the second block 52, and the second block 52.

The second block 52 may be displayed for a user to recognize a boundary, and may be highlighted if it is being focused on. The boundary between the plurality of first blocks 51 included in the second block 52 may, or may not, be displayed. If the second block 52 is being focused on, i.e., if one of the plurality of first blocks 51 included in the second block 52 is selected, the second block 52 may be located in a center of the screen.

Regarding the standard for merging the blocks, the plurality of first blocks 51 may be merged to form the single second block 52 if:
(1) the plurality of first blocks 51 have the same x coordinates in a left top side and the same width, and are close to each other vertically (if a space between two first blocks close to each other vertically is a predetermined threshold value or less, the two blocks may be determined to be close to each other);
(2) the plurality of first blocks 51 has the same y coordinates in a left top side and the same height, and is close to each other transversely (if a space between two first blocks close to each other transversely is a predetermined threshold value or less, the two blocks may be determined to be close to each other; and
(3) the plurality of first blocks are siblings of the same parent and have the same tag name.

According to the above standards, the plurality of first blocks 51 are merged in a recursive manner until the second block 52 becomes the reference size as described above.

The controller 15 may link a detailed block list of the plurality of first blocks 51 through a single block pointer and store the list in the storage unit 14 if the plurality of first blocks 51 are merged to form the second block 52. The controller 15 may set the size of the corresponding second block 52 by using a maximum value and a minimum value of coordinates of the plurality of first blocks 51.

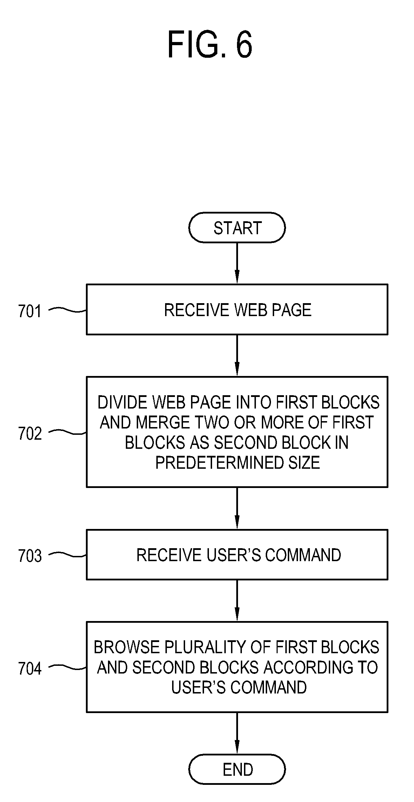

FIG. 6 is a flowchart of a control method of the display apparatus 1 which is described with reference to FIGS. 1 to 5. At operation 701, the display apparatus 1 receives a web page selected by a user. At operation 702, the display apparatus 1 divides the received web page into a plurality of first blocks 51, and merges two or more of the plurality of first blocks 51 to form the single second block 52 corresponding to a predetermined reference size and displays the merged first blocks 51.

At operation 703, the display apparatus 1 receives a user's command to perform a web browsing function. At operation 704, the display apparatus 1 browses the plurality of first blocks 51 and the second block 52 according to the user's command.

By the above method, a user may browse the web page more conveniently and promptly.

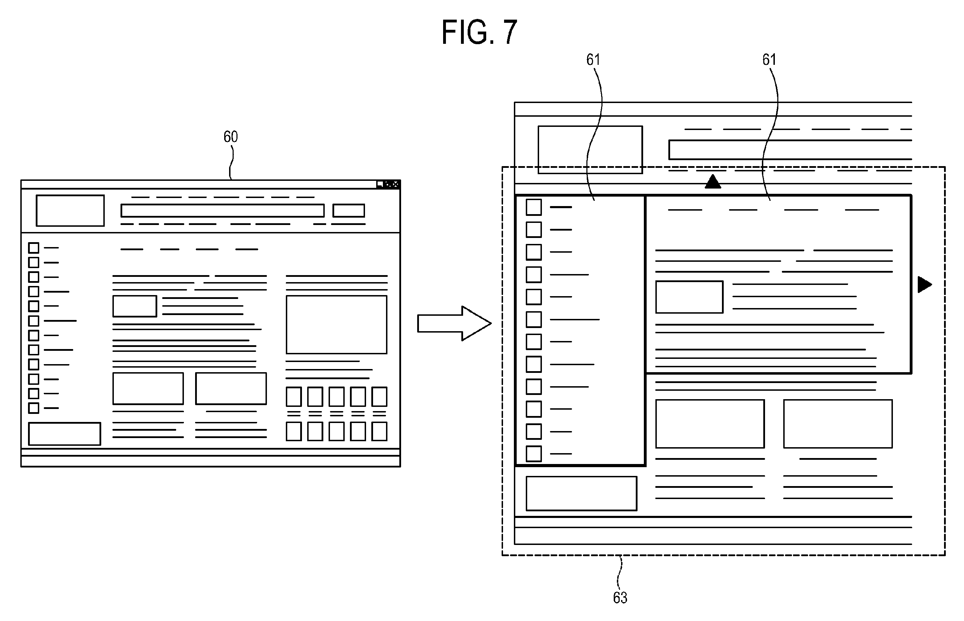

According to another exemplary embodiment, the controller 15 of the display apparatus 1 may browse the web page by focusing on the plurality of first blocks 51 at a time. FIG. 7 illustrates a web page 60 according to the present exemplary embodiment. Description of the configuration of the display apparatus according to the present exemplary embodiment which is the same or similar to that according to the foregoing exemplary embodiment described with reference to FIGS. 1 to 6 will be omitted.

A reference numeral 61 in FIG. 7 refers to two first blocks of the web page 60, and a reference numeral 63 refers to a screen of the display unit 13. As shown therein, the two first blocks 61 are close to each other, and both of them may be displayed in the screen of the display unit 13. That is, the two first blocks 61 satisfy the condition for the reference size. FIG. 7 illustrates two first blocks 61 which are being focused on at a specific time, but the number of the first blocks focused on at a specific time is not limited thereto, and three or more of first blocks may be focused at a time if they satisfy the reference size.

Referring to FIG. 7, the controller 15 focuses the two first blocks 61 simultaneously if the focus moves to one of the two first blocks 61 while another first block is being focused on during the web browsing operation. That is, the controller 15 displays the two first blocks 61 simultaneously on the screen of the display unit 13.

This may be understood as if the two first blocks 61 are treated as the second block described in the foregoing exemplary embodiment.

In the present exemplary embodiment, the two first blocks 61 are displayed for a user to recognize a boundary between the two first blocks 61 and a neighboring first block. If one of the two first blocks 61 is focused on, both of the two first blocks 61 may be highlighted. The boundary between the two first blocks 61 may, or may not, be displayed. If one of the two first blocks 61 is focused on, the two first blocks 61 may be treated as a single block and located in the center of the screen.

If a user moves the focus from one of the two first blocks 61, the controller 15 may skip the movement of the focus between the two first blocks 61 and move the focus to another first block next to the two first blocks 61.

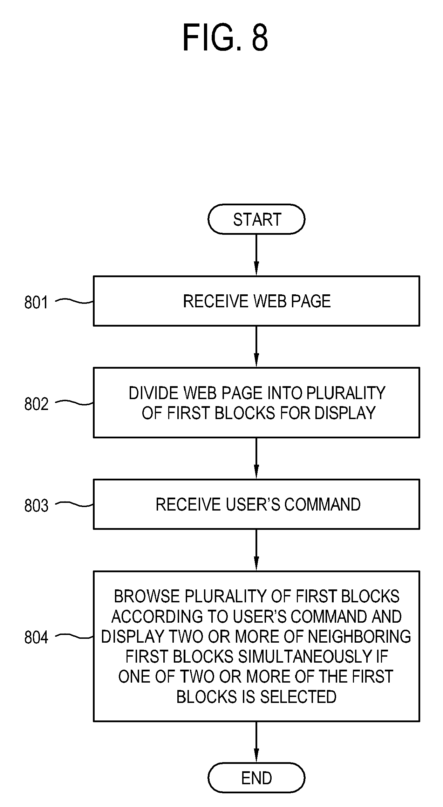

FIG. 8 is a flowchart of a control method of the display apparatus 1 in FIGS. 1 to 4 and 7. At operation 801, the display apparatus 1 receives the web page selected by a user. At operation 802, the display apparatus 1 divides the received web page into a plurality of first blocks and displays the first blocks.

At operation 803, the display apparatus 1 receives a user's command to perform the web browsing operation. At operation 804, the display apparatus 1 browses the plurality of first blocks by moving the focus between the first blocks according to the user's command, and displays two or more of the neighboring two blocks at a time if one of the two or more neighboring first blocks that meet the reference size is focused.

Then, a user may browse the web page more conveniently and promptly.

The display apparatus according to the exemplary embodiments includes a TV but is not limited thereto. Alternatively, the display apparatus according to the exemplary embodiments may further include a smart phone or a mobile phone.

As described above, a display apparatus and a control method thereof according to the exemplary embodiments enables a user to browse a web page more promptly and easily.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus comprising:
an input unit which receives a web page;
an image processor which processes the web page;
a display unit which displays the web page processed by the image processor;
a command receiver which receives a user's command for the web page; and
a controller which divides the web page into a plurality of first blocks, merges two or more of the plurality of first blocks to form a second block, and browses the plurality of first blocks and the second block according to the user's command,
wherein the second block has a predetermined reference size.

2. The display apparatus according to claim 1, wherein the reference size of the second block corresponds to a size of a screen of the display unit.

3. The display apparatus according to claim 1 or claim 2, wherein the controller moves a focus to first blocks, which are not merged to form the second block, and to the second block when the browsing is performed.

4. The display apparatus according to any one of claims 1 to 3, wherein two or more of neighboring first blocks which are merged to form the second block have coordinates, widths and heights at least one of which is the same among the neighboring first blocks.

5. The display apparatus according to any one of the preceding claims, wherein the controller divides the web page into the plurality of first blocks by using a hierarchy structure of the web page

6. A control method of a display apparatus, the control method comprising:
receiving a web page;
dividing the web page into a plurality of first blocks, merging two or more of the plurality of first blocks to form a second block, and displaying the plurality of first blocks and the second block;
receiving a user's command; and
browsing the plurality of first blocks and the second block according to the user's command
wherein the second block has a predetermined reference size.

7. The control method according to claim 6, wherein the reference size of the second block corresponds to a size of a screen of the display unit.

8. The control method according to claim 6 or claim 7, wherein the browsing comprises moving a focus to first blocks not merged to form the second block and to the second block.

9. The control method according to any one of claims 6 to 8, wherein two or more of neighboring first blocks, which are merged to form the second block, have coordinates, widths and heights at least one of which is the same among the neighboring first blocks.

10. The control method according to any one of claims 6 to 9, wherein the displaying comprises dividing the web page into the plurality of first blocks by using a hierarchy structure of the web page for display.
